(19) Europäisches Patentamt
European Patent Office
Office européen des brevets

(11) **EP 2 544 279 A1**

(12) **EUROPEAN PATENT APPLICATION**
published in accordance with Art. 153(4) EPC

(43) Date of publication:
**09.01.2013 Bulletin 2013/02**

(51) Int Cl.:
**H01M 4/525** (2010.01)   **C01G 53/00** (2006.01)
**H01M 4/505** (2010.01)

(21) Application number: **11750768.1**

(22) Date of filing: **03.03.2011**

(86) International application number:
**PCT/JP2011/054942**

(87) International publication number:
**WO 2011/108659 (09.09.2011 Gazette 2011/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2010   JP 2010048187**

(71) Applicant: **JX Nippon Mining & Metals Corporation
Chiyoda-ku
Tokyo 100-0004 (JP)**

(72) Inventor: **SATOH,Hirohito
Kitaibaraki-shi
Ibaraki 319-1535 (JP)**

(54) **POSITIVE ELECTRODE ACTIVE MATERIAL FOR LITHIUM ION BATTERY, POSITIVE ELECTRODE FOR LITHIUM ION BATTERY, AND LITHIUM ION BATTERY.**

(57)   The present invention provides a positive electrode active material for lithium ion battery which attains a lithium ion battery having high safety. The positive electrode active material has a layer structure for a lithium ion battery, in which the positive electrode active material is represented by the following composition formula:

$$Li_x(Ni_yM_{1-y})O_z$$

(wherein M represents Mn and Co, x is 0.9 to 1.2, y is $0.8 \pm 0.025$, and z is 1.8 to 2.4), and
$\Delta T = T41-T44$, that is a difference between a first exothermic peak temperature T44 (°C) of a first lithium ion battery and a first exothermic peak temperature T41 (°C) of a second lithium ion battery, both are obtained by a differential scanning calorimetry (DSC) carried out at temperature increase rate of 5°C/min, when a lithium ion battery using a positive electrode mixture prepared with the positive electrode active material, a binder, and a conductive material in weight ratio of 91%, 4.2%, and 4.8%, respectively is charged to 4.4 V for the first lithium ion battery and 4.1 V for the second lithium ion battery and electrolyte liquid containing 1 M-LiPF$_6$ dissolved in a mixture solvent of ethylene carbonate (EC) and dimethyl carbonate (DMC) (volume ratio 1 : 1) is used per 1.0 mg of a positive electrode mixture, satisfies the condition of $\Delta T \leq 15$ (°C).

FIG. 1

**Description**

BACKGROUND OF THE INVENTION

1. Field of the Invention

The present invention relates to a positive electrode active material for a lithium ion battery, a positive electrode for a lithium ion battery, and a lithium ion battery.

2. Description of Related Art

A lithium ion battery using, as its material, lithium which has a small specific gravity and tends to enter into an electrochemical reaction can store energy two to three times that of a nickel-cadmium battery or nickel-metal hydride battery having the same weight. The lithium ion battery has such a superb advantage whereas it has a problem concerning safety.

With regard to lithium ion batteries, there have been many reports concerning accidents caused by abnormal heat and ignition of batteries because materials constituting the batteries are burned for some reason. The phenomena of abnormal heat generation and ignition that occur in lithium ion batteries are called "thermal runaway". When the temperature of a battery is raised, materials contained in the battery are decomposed to generate heat. Then, if the rate of heat generation inside of the battery exceeds the rate of heat radiation from the battery, this induces thermal runaway, causing a fire.

Various methods are conventionally used to improve the safety of a lithium ion battery. For example, Patent document 1 discloses a positive electrode material for lithium secondary battery comprising, as a lithium-containing complex oxide, a mixture of a lithium-containing complex oxide having a layer rock-salt structure and a lithium-containing complex oxide having a pseudo-spinel structure, wherein the lithium-containing complex oxide is represented by the general formula $Li_pCo_xM_yO_zF_a$ (where M represents at least one element selected from the group consisting of transition metal elements other than Co, Al, Sn, and alkali earth metal elements, $0.9 \leq p \leq 1.1$, $0.97 \leq x \leq 1.00$, $0 \leq y \leq 0.03$, $1.9 \leq z \leq 2.1$, $x + y = 1$, and $0 \leq a \leq 0.02$). Patent document 1 describes that a positive electrode material for lithium secondary battery, which comprises a lithium-containing complex oxide and is superior in thermal safety, volumetric capacity density, and charge/discharge cycle characteristics, can be provided.

Also, Patent document 2 discloses a positive electrode active material for nonaqueous electrolyte secondary battery comprising at least a lithium transition metal complex oxide having a spinel structure, wherein the exothermic onset temperature of the lithium transition metal complex oxide in the measurement using differential scanning calorimetry is 220°C or more and calorific value of the lithium transition metal complex oxide in the measurement using differential scanning calorimetry is 700 to 900 mJ/mg. Patent document 2 describes that a positive electrode active material for nonaqueous electrolyte secondary battery having excellent battery characteristics even in a severer working environment can be provided.

Further, Patent document 3 discloses a lithium secondary battery comprising a positive electrode using a lithium-manganese complex oxide having a spinel structure as a positive electrode active material and a negative electrode using a carbon material as a negative electrode active material which are impregnated with a nonaqueous electrolytic solution, wherein the total calorific value of the lithium-manganese complex oxide measured by a differential scanning calorimeter is 1.0 kJ/g or less. Patent document 3 describes that this structure can provide a nonaqueous electrolyte secondary battery being superior in safety.

(Patent document 1) Japanese Patent Application Publication No. 2006-164758
(Patent document 2) Japanese Patent Application Publication No. 2004-227790
(Patent document 3) Japanese Patent Application Publication No. 2004-6264

SUMMARY OF THE INVENTION

However, safety of a lithium ion battery is a very important issue, and with regard to a high quality positive electrode active material for a lithium ion battery, there is still a need for an improvement.

In view of this situation, an object of the present invention is to provide a positive electrode material for lithium ion battery to attain a lithium ion battery being superior in safety.

The inventor has made earnest studies, and as a result, found that there is a close correlation between the shape of the DSC (differential scanning calorific measurement) exothermic curve of a positive electrode active material and the safety of a battery to be produced. Specifically, it was found that, when a difference in a first exothermic peak measured from DSC exothermic curve of a positive electrode active material for a lithium ion battery, which is related to a battery charged to two different types of pre-determined voltages, is equal to or smaller than a certain value, the battery releases heat mildly, and therefore thermal runaway can be well inhibited.

One aspect of the invention that is completed according to the findings described above is related to a positive electrode active material having a layer structure for a lithium ion battery, in which the positive electrode active material is represented by the following composition formula:

$$Li_x(Ni_yM_{1-y})O_z$$

(wherein M represents Mn and Co, x is 0.9 to 1.2, y is 0.8 $\pm$ 0.025, and z is 1.8 to 2.4), and $\Delta T = T41-T44$, that is a difference between a first exothermic peak temperature T44 (°C) of a first lithium ion battery and a first exothermic peak temperature T41 (°C) of a second lithium ion battery, both are obtained by a differential scanning calorimetry (DSC) carried out at temperature increase rate of 5°C/min, when a lithium ion battery using a positive electrode mixture prepared with the positive electrode active material, a binder, and a conductive material in weight ratio of 91%, 4.2%, and 4.8%, respectively is charged to 4.4 V for the first lithium ion battery and 4.1 V for the second lithium ion battery and electrolyte liquid containing 1 M-LiPF$_6$ dissolved in a mixture solvent of ethylene carbonate (EC) and dimethyl carbonate (DMC) (volume ratio 1 : 1) is used per 1.0 mg of a positive electrode mixture, satisfies the condition of $\Delta T \leq$ 15 (°C).

In an embodiment of the positive electrode active material for lithium ion battery according to the present invention, $\Delta T$ satisfies the condition of $\Delta T \leq 10$ (°C).

In another embodiment of the positive electrode active material for lithium ion battery according to the present invention, $\Delta T$ satisfies the condition of $\Delta T \leq 7$ (°C).

According to another aspect of the present invention, there is provided a positive electrode for lithium ion battery using the positive electrode active material for lithium ion battery according to the present invention.

According to another aspect of the present invention, there is provided a lithium ion battery using the positive electrode for lithium ion battery according to the present invention.

ADVANTAGEOUS EFFECT OF THE INVENTION

According to the present invention, a positive electrode active material for lithium ion battery which attains a lithium ion battery having high safety can be provided.

BRIEF DESCRIPTION OF THE DRAWINGS

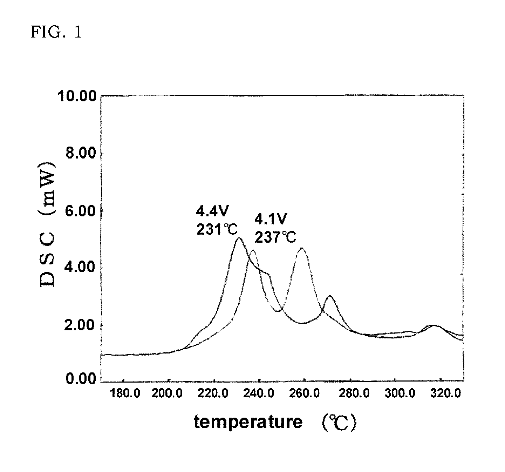

FIG. 1 is a DSC exothermic curve relating to the Example 3.

DETAILED DESCRIPTION OF EMBODIMENTS

(Structure of positive electrode active material for lithium ion battery)

As the material of the positive electrode active material for lithium ion battery according to the present invention, compounds useful as the positive electrode active material for the positive electrode of usual lithium ion batteries may be widely used. It is particularly preferable to use a lithium-containing transition metal oxide such as lithium cobaltate (LiCoO$_2$), lithium nickelate (LiNiO$_2$), and lithium manganate (LiMn$_2$O$_4$). The positive electrode active material for a lithium ion battery that is produced by using such material has a layer structure represented by the following composition formula:

$$Li_x(Ni_yM_{1-y})O_z$$

(wherein M represents Mn and Co, x is from 0.9 to 1.2, y is 0.8 $\pm$ 0.025, and z is from 1.8 to 2.4).

The ratio of lithium to the total metals in the positive electrode active material for lithium ion battery is 0.9 to 1.2. It is because a stable crystal structure is scarcely kept when the ratio is less than 0.9 whereas high capacity of the battery cannot be ensured when the ratio exceeds 1.2.

The positive electrode active material for lithium ion battery is constituted of primary particles, secondary particles formed from aggregated primary particles, or a mixture of primary particles and secondary particles. The average particle diameter of these primary and secondary particles of the positive electrode active material for lithium ion battery is preferably 2 to 15 $\mu$m.

When the average particle diameter is less than 2 $\mu$m, the application to the current collector is made difficult. When the average particle diameter exceeds 15 $\mu$m, voids are easily produced when the active material particles are filled, leading to less fillability. The average particle diameter is more preferably 3 to 12 $\mu$m.

(Structure of positive electrode for lithium ion battery and lithium ion battery using positive electrode)

The positive electrode for a lithium ion battery related to the embodiment of the invention has a constitution in which a positive electrode mixture prepared by mixing the positive electrode active material for a lithium ion battery with a constitution described above, a conductive material, and a binder is formed on one side or both sides of a current collector made of an aluminum foil or the like. The lithium ion battery related to the embodiment of the invention is equipped with the positive electrode for a lithium ion battery which has the constitution as described above.

The lithium ion battery manufactured by using the positive electrode active material for a lithium ion battery of the invention is characterized by the differential scanning calorimetry measurement as described below. As used herein, differential scanning calorimetry is to measure, as a function of temperature, the calorie difference between a sample and a reference material accompanied with temperature change. For a curve (i.e., DSC heat release curve) plotted with the measurement values with heat increase rate of 5°C/min that is obtained for a lithium ion battery charged to two kinds of pre-determined voltage, when the difference in a first heat release peak temperature between them is equal to or smaller than the pre-determined value described below, the battery using the positive electrode active material for a lithium ion battery releases heat mildly, and therefore thermal runaway can be well inhibited. When a lithium ion battery is charged, Li is released from the positive electrode material. Thus, as the charge voltage increases, its structure becomes unstable and DSC heat release peak temperature shifts to low temperature side. Thus, having small shift amount of DSC heat release peak temperature even under increased charge voltage enables enhancement of the safety against over-voltage charge.

Specifically, $\Delta T = T41-T44$, that is a difference between a first exothermic peak temperature T44 (°C) of a first lithium ion battery and a first exothermic peak temperature T41 (°C) of a second lithium ion battery, both are obtained by a differential scanning calorimetry (DSC) carried out at temperature increase rate of 5°C/min, when a lithium ion battery using a positive electrode mixture prepared with a positive electrode active material of the present invention, a binder, and a conductive material in weight ratio of 91%, 4.2%, and 4.8%, respectively is charged to 4.4 V for the first lithium ion battery and 4.1 V for the second lithium ion battery and electrolyte liquid containing 1 M-LiPF$_6$ dissolved in a mixture solvent of ethylene carbonate (EC) and dimethyl carbonate (DMC) (volume ratio 1 : 1) is used per 1.0 mg of a positive electrode mixture, satisfies the condition of $\Delta T \leq 15$ (°C). More preferably, $\Delta T \leq 10$ (°C). Still more preferably, $\Delta T \leq 7$ (°C).

(Method for producing positive electrode active material for lithium ion battery)

Next, a method for producing a positive electrode active material for lithium ion battery according to the embodiment of the present invention will be explained in detail.
First, a metal salt solution is prepared. The metal is Ni, Co, or Mn. Also, the metal salt is a sulfate, chloride, nitrate, acetate, or the like and, particularly, a nitrate is preferable. This is because the nitrate can be calcined as it is, so that a cleaning process can be omitted, even if the nitrate is mixed as impurities in the calcination raw material, and the nitrate functions as an oxidant to promote oxidation of metals in the calcination raw material. The metal salt is prepared such that each metal is contained in a desired molar ratio. The molar ratio of each metal in the positive electrode active material is thereby determined.

Next, lithium carbonate is suspended in pure water, and then, a metal salt solution of the above metal is poured into the mixture to produce a metal carbonate solution slurry. At this time, lithium-containing carbonate microparticles precipitate in the slurry. When sulfate, chloride and the like are employed as metal salt, the lithium compounds generated in precipitation are not used as lithium raw material at heat treatment, and slurry is washed with a saturated lithium carbonate solution and then separated by filtration. When nitrate and acetate are employed as metal salt, the lithium compounds generated in precipitation are used as lithium raw material at heat treatment, and slurry is not washed and separated as it is by filtration, followed by drying, thereby enabling the salt to be used as a calcination precursor.
Next, the separated lithium-containing carbonate is dried to obtain a lithium salt composite (precursor of a positive electrode active material for lithium ion battery) powder.

Next, a calcinating container having a predetermined capacity is prepared and the powder of the precursor of a positive electrode active material for lithium ion battery is filled in the calcinating container. Next, the calcinating container filled with the powder of the precursor of the positive electrode active material for lithium ion battery is transferred to a kiln to calcine. The calcination is performed by keeping the container with heating for a predetermined time in an oxygen atmosphere. Also, it is desirable that the calcination is performed under a pressure of 101 to 202 KPa because the quantity of oxygen in the composition is increased. The calcination temperature is appropriately set corresponding to the amount of Li in the positive electrode material precursor used as the raw material. Specifically, because the calcination tends to progress when the amount of Li is large, the optimum value of calcination temperature is shifted to a lower temperature side as compared with the case where the amount of Li is small. As mentioned above, the relation between the calcination temperature and the amount of Li contained in the positive electrode active material precursor affects the nature of a positive electrode active material for lithium ion battery and hence affects the battery characteristics of a lithium ion battery using the positive electrode active material.

Subsequently, the powder is taken out of the calcinating container and ground to obtain a positive electrode active material powder.

Also, the positive electrode for lithium ion battery according to the present invention is manufactured by mixing the positive electrode active material manufactured in the above manner, a conductive material, and a binder to prepare a positive electrode mix, and by disposing the positive electrode mix on one or both surfaces of a current collector made of an aluminum foil or the like. Moreover, the lithium ion battery according to the present invention is manufactured using this positive electrode for lithium ion battery.

Examples

Although examples are provided for facilitating understanding of the present invention and its advantage, the present invention is not limited to the following examples.

(Examples 1 to 4)

First, lithium carbonate to be charged in an amount as described in Table 1 was suspended in 3.2 liter of pure water, and then, 4.8 liter of a metal salt solution was added to the mixture. Here, the metal salt solution was prepared in such a manner that the compositional ratio of a hydrate of a nitrate of each metal was that described in Table 1 and the number of moles of all metals was 14.

In this case, the amount of lithium carbonate to be suspended is a value at which x in the formula $Li_x(Ni_yM_{1-y})O_z$ of a product (positive electrode for lithium ion secondary battery, that is, positive electrode active material) accords to that described in Table 1 and is calculated according to the following equation.

$$W\ (g) = 73.9 \times 14 \times (1 + 0.5X) \times A$$

In the above formula, "A" is a value multiplied in order to subtract, in advance, the amount of lithium originated from a lithium compound other than lithium carbonate left in the raw material after filtration besides the amount required for the precipitation reaction. "A" is 0.9 when, like the case of using a nitrate or acetate, the lithium salt reacts as the calcination raw material, and 1.0 when, like the case of using a sulfate or chloride, the lithium salt does not react as the calcination raw material.

Though lithium-containing carbonate microparticles were precipitated in the solution by this treatment, this precipitate was separated by filtration using a filter press.

Next, the precipitate was dried to obtain a lithium-containing carbonate (precursor of positive electrode active material for lithium ion battery).

Next, a calcinating container was prepared to fill the lithium-containing carbonate therein. Next, the calcinating container was placed in an oxygen ambient furnace under atmospheric pressure and heated to the calcination temperature described in Table 1 for 6 hours. Then, the calcinating container was kept at this temperature under heating for 2 hours, and then, cooled to obtain an oxide. Then, the obtained oxide was pulverized to obtain a positive electrode active material powder for lithium ion battery.

(Examples 5 and 6)

In Example 5, the same procedures as in Examples 1 to 4 were carried out except that each metal of the raw material was altered to the composition shown in Table 1 and the calcination was performed not under an atmospheric pressure but under a pressure of 120 KPa. In Example 6, the same procedures as in Example 5 were carried out except that each metal of the raw material was altered to the composition shown in Table 1 and the calcination was performed under a pressure of 180 KPa.

(Comparative Examples 1 and 2)

In Comparative Examples 1 and 2, the same procedures as in Examples 1 to 4 were carried out except that the amount of lithium carbonate to be suspended and calcination temperature were altered.

(Evaluation)

Content of Li, Ni, Mn or Co in each positive electrode material was measured by inductively coupled plasma atomic emission spectrometry (ICP-AES) and compositional ratio (i.e., molar ratio) of each element was calculated. Further, according to X ray diffraction measurement, the crystal structure was confirmed to be a layer structure. Next, a DSC exothermic curve was measured for the positive electrode material. First, the positive electrode material, a binder, and a conductive material were weighed to have the weight ratio of 91%, 4.2%, and 4.8%, respectively. Then, to an organic solvent (N-methyl pyrrolidone) in which the binder is dissolved, the positive electrode material and conductive material were added to give a slurry as a positive electrode mixture, which was then coated on an Al foil. After drying and a press treatment, it was provided as a positive electrode. In the positive electrode, the positive electrode mixture was punched to have weight of 10.0 to 10.2 mg. Subsequently, 2032 type coin cell having Li as a counter electrode was prepared for evaluation. By using an electrolyte liquid in which 1 M-LiPF$_6$ is dissolved in ethylene carbonate (EC) and dimethyl carbonate (DMC) (volume ratio 1 : 1), each of (A) and (B) was conducted:

(A): it was charged to 4.3 V at current density of 0.2 C, and after that, it was discharged to 3.0 V and charged again to 4.4 V, and similarly,
(B): it was charged to 4.3 V at current density of 0.2 C, and after that, it was discharged to 3.0 V and charged again to 4.1 V.

Next, each of the electrode prepared by (A) and (B) was taken out of the coin cell and washed with dimethyl carbonate (DMC). Then, the positive electrode mixture was carved out and 1.0 mg of the mixture was sealed in a SUS sample pan together with an electrolyte liquid in which 1 M-LiPF$_6$ is dissolved in ethylene carbonate (EC) and dimethyl carbonate (DMC) (volume ratio 1 : 1). By using DSC6200 manufactured by Seiko Instruments Inc., differential scanning calorimetric measurement was carried out with temperature increase rate of 5°C/min. As a result, a DSC exothermic curve was obtained, and from the DSC exothermic curve, a first exothermic peak temperature T44 (°C) of the electrode prepared by (A), a first exothermic peak temperature T41 (°C) of the electrode prepared by (B), and the difference between them, i.e., $\Delta T$, were obtained. Further, with regard to the electrode prepared by (A), at ambient temperature of 25°C, by piercing in thickness direction the battery with a nail having diameter of 2 mm, heat generation was caused and, thirty seconds later, surface temperature of the battery was measured.

The results are given in Table 1. Further, in FIG. 1, the DSC exothermic curves related to the Example 3 shown in Table 1 are illustrated.

[Table 1]

| | Suspension amount of lithium carbonate (g) | Composition ratio of each metal in entire metals except Li | | | Calcination temperature (°C) | x | z | T44 (°C) | T41 (°C) | $\Delta T$ | Surface temperature after 30 sec (°C) |
|---|---|---|---|---|---|---|---|---|---|---|---|
| | | Ni | Co | Mn | | | | | | | |
| Example 1 | 1406 | 80 | 10 | 10 | 900 | 1.02 | 2.20 | 230 | 239 | 9 | 38 |
| Example 2 | 1415 | 80 | 10 | 10 | 900 | 1.04 | 2.31 | 229 | 241 | 12 | 36 |
| Example 3 | 1406 | 80 | 10 | 10 | 880 | 1.02 | 2.25 | 231 | 237 | 6 | 35 |
| Example 4 | 1424 | 80 | 10 | 10 | 880 | 1.06 | 2.35 | 230 | 238 | 8 | 35 |
| Example 5 | 1406 | 80 | 10 | 10 | 880 | 1.02 | 2.33 | 232 | 237 | 5 | 34 |
| Example 6 | 1406 | 80 | 10 | 10 | 880 | 1.02 | 2.35 | 237 | 240 | 3 | 33 |
| Comparative Example 1 | 1424 | 80 | 10 | 10 | 900 | 1.06 | 2.38 | 221 | 237 | 16 | 49 |

(continued)

|  | Suspension amount of lithium carbonate (g) | Composition ratio of each metal in entire metals except Li | | | Calcination temperature (°C) | x | z | T44 (°C) | T41 (°C) | ΔT | Surface temperature after 30 sec (°C) |
|---|---|---|---|---|---|---|---|---|---|---|---|
|  |  | Ni | Co | Mn |  |  |  |  |  |  |  |
| Comparative Example 2 | 1406 | 80 | 10 | 10 | 920 | 1.02 | 2.14 | 208 | 226 | 18 | 51 |

## Claims

1. A positive electrode active material having a layer structure for a lithium ion battery, in which the positive electrode active material is represented by the following composition formula:

$$Li_x(Ni_yM_{1-y})O_z$$

(wherein M represents Mn and Co, x is 0.9 to 1.2, y is $0.8 \pm 0.025$, and z is 1.8 to 2.4), and
ΔT = T41-T44, that is a difference between a first exothermic peak temperature T44 (°C) of a first lithium ion battery and a first exothermic peak temperature T41 (°C) of a second lithium ion battery, both are obtained by a differential scanning calorimetry (DSC) carried out at temperature increase rate of 5°C/min, when a lithium ion battery using a positive electrode mixture prepared with the positive electrode active material, a binder, and a conductive material in weight ratio of 91%, 4.2%, and 4.8%, respectively is charged to 4.4 V for the first lithium ion battery and 4.1 V for the second lithium ion battery and electrolyte liquid containing 1 M-$LiPF_6$ dissolved in a mixture solvent of ethylene carbonate (EC) and dimethyl carbonate (DMC) (volume ratio 1 : 1) is used per 1.0 mg of a positive electrode mixture, satisfies the condition of ΔT ≤ 15 (°C).

2. The positive electrode active material for a lithium ion battery according to Claim 1, wherein ΔT satisfies the condition of ΔT ≤ 10 (°C).

3. The positive electrode active material for a lithium ion battery according to Claim 2, wherein ΔT satisfies the condition of ΔT ≤ 7 (°C).

4. A positive electrode for a lithium ion battery wherein the positive electrode active material for a lithium ion battery described in any one of Claims 1 to 3 is used.

5. A lithium ion battery wherein the positive electrode for a lithium ion battery described in Claim 4 is used.

FIG. 1

## INTERNATIONAL SEARCH REPORT

International application No.

PCT/JP2011/054942

### A. CLASSIFICATION OF SUBJECT MATTER
*H01M4/525*(2010.01)i, *C01G53/00*(2006.01)i, *H01M4/505*(2010.01)i

According to International Patent Classification (IPC) or to both national classification and IPC

### B. FIELDS SEARCHED

Minimum documentation searched (classification system followed by classification symbols)
H01M4/525, C01G53/00, H01M4/505

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-107818 A  (Sumitomo Metal Mining Co., Ltd.), 20 April 2006 (20.04.2006), paragraphs [0063] to [0104] (Family: none) | 1-5 |
| A | JP 2006-107845 A  (Sumitomo Metal Mining Co., Ltd.), 20 April 2006 (20.04.2006), paragraphs [0070] to [0155] (Family: none) | 1-5 |

☒ Further documents are listed in the continuation of Box C. ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 28 April, 2011 (28.04.11) | 17 May, 2011 (17.05.11) |

| Name and mailing address of the ISA/ <br> Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2011/054942 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2009/060603 A1  (Panasonic Corp.),<br>14 May 2009 (14.05.2009),<br>paragraphs [0048] to [0051], [0076] to [0103];<br>fig. 5, 12<br>& US 2009/0117469 A1    & EP 2207227 A1<br>& CN 101809788 A        & KR 10-2010-0068459 A | 1-5 |
| A | JP 2007-48744 A  (Matsushita Electric<br>Industrial Co., Ltd.),<br>22 February 2007 (22.02.2007),<br>paragraphs [0079], [0082]<br>& US 2007/0015058 A1    & KR 10-2007-0009447 A<br>& CN 1897331 A | 1-5 |
| A | JP 2007-95443 A  (Sanyo Electric Co., Ltd.),<br>12 April 2007 (12.04.2007),<br>paragraphs [0020] to [0044]; fig. 2 to 3<br>(Family: none) | 1-5 |
| A | JP 2003-7299 A  (Samsung SDI Co., Ltd.),<br>10 January 2003 (10.01.2003),<br>paragraphs [0056] to [0115]; fig. 19 to 26<br>& US 2003/0082448 A1    & US 2006/0281005 A1<br>& US 2010/0183922 A     & EP 1267431 A1<br>& KR 10-2002-0095421 A  & CN 1399364 A | 1-5 |

Form PCT/ISA/210 (continuation of second sheet) (July 2009)

**EP 2 544 279 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006164758 A
- JP 2004227790 A
- JP 2004006264 A